# EUROPEAN PATENT SPECIFICATION

(11) **EP 3 499 057 B1**
(45) Date of publication and mention of the grant of the patent: **15.04.2020**
(21) Application number: 17207079.9
(22) Date of filing: 13.12.2017
(51) Int. Cl.: F16B 37/08

(54) **FASTENER AND SYSTEM FOR FASTENING AN OBJECT TO A COMPONENT**
BEFESTIGUNGSELEMENT UND SYSTEM FÜR DIE BEFESTIGUNG EINES GEGENSTANDS AN EINER KOMPONENTE
ATTACHE ET SYSTÈME POUR FIXER UN OBJET SUR UN COMPOSANT

(43) Date of publication of application: 19.06.2019
(73) Proprietor: Newfrey LLC, New Britain, CT 06053 (US)
(72) Inventor: Rosemann, Frank, 35394 Gießen (DE); Kempf, Christian, 35394 Gießen (DE)
(74) Representative: SBD IPAdmin

(56) References cited:
- EP-A2- 1 439 313
- US-A1- 2011 265 295
- US-A1- 2013 056 595

## Description

The invention concerns a fastener for attaching components to surfaces and a system comprising a fastener and a stud for fastening an object to a workpiece. More particularly the present invention relates to a fastener for attaching components to surfaces comprising notably an opening adapted to receive the shaft of a stud.

Fasteners of the specified type are often used in automotive manufacture for attaching various objects, such as trim parts, attached parts, lines, or the like, to studs attached to parts of the vehicle chassis or vehicle body. Such systems and fasteners may for example be used to fasten a rocker panel to some surface components which extend into the interior of the vehicle.

Many current vehicles employ resilient clips to secure various components to the vehicle body. During assembly of the vehicle, it is conventional procedure to first pre-assemble a panel assembly before securing it.

Due to slight misalignments, which can occur between the fasteners and their corresponding mounting workpieces, some of the fasteners may not be properly seated and secured.

Accordingly, there is a need in the art for an improved fastener having a relatively low installation force and a relatively high removal force that is relatively more tolerant of misalignment problems.

EP1439313 discloses a resilient clip for mounting a metal structure to a flanged component. The resilient clip includes a body portion having a coupling region and a mating portion to be mated with the metal structure, a metal retainer is coupled to the coupling region. The metal retainer has a body portion defining an engagement aperture coupled to the coupling region and pair of abutting flanges. At least one of the abutting flanges has a locking member configured to engage the flanged component.

Such fastener is satisfactory, but there remains a need for a more flexible fastener, easy to manufacture, reliable and simple to install.

It is hence an object of the present invention to at least alleviate the aforementioned shortcomings.

More particularly, it is an object of the invention to provide a fastener for fastening an object provided with a stud to a component according to claim 1.

For example, the first and the second panels belongs to the same guide part or trim part or rail.

The fastener according to the invention combines multiple functions in a single part. It allows simple assembly onto a stud, for example an externally threaded stud, of a support part, with high retention forces being achievable. Such fastener is adapted to provide an easy disassembly without lowering the retention forces in the assembly position of the stud. The disassembly does not damage the fastener or the components to be joined, enabling the fastener to be re-used if needed, and therefore decreasing the number of wasted parts. The disassembly can be performed without any supplemental tool. The disassembly can be performed without direct accessibility to the stud.

In some embodiments the aperture further comprises a third portion, the first portion extending between the second portion and the third portion. The lateral wall comprises a second passage adapted for transferring the stud from the assembly position to the disassembly position. Thus two disassembly direction are possible, which allows an easier mounting of the fastener. Indeed, the manipulator does not need to assemble the fastener in a particular direction.

In some embodiments the locking element comprises a locking tongue projecting in the opening toward the longitudinal axis. The locking tongue is easy to manufacture and provide good retention force.

In some embodiments the locking element comprises two locking tongues, each of the locking tongues comprising a projection adapted to cooperate with an undercut provided in the stud. The two tongues enable a centring of the stud in the fastener and a repartition of the retention forces.

In some embodiments, the first recess is defined at least partly by the bottom side and the top side, and the bottom side is provided with a first spring finger adapted to protrude within the first recess, the first spring finger forming a centring element. A pre-assembly can thus be performed.

In some embodiments the second recess is defined at least partly by the bottom side and the top side, and the bottom side is provided with a second spring finger adapted to protrude within the second recess. The pre-assembly can be performed on both sides of the fastener.

In some embodiments the first and/or second spring finger comprises a protrusion provided at a free end of the bottom side, and the protrusion projects within the first and/or second recess. The protrusion can cooperate with a corresponding hole.

In some embodiments the top side is flat.

In some embodiments the bottom side comprises a projection, the projection partly extending at the periphery of the aperture. The projection is adapted to surround the head of the stud.

The present invention is also directed to a system comprising a fastener as disclosed above and a stud comprising a shaft, and wherein the stud is movable between an assembly position, in which the shaft extends in the first portion and cooperates with the locking element, such that the shaft is secured within the first portion, and a disassembly position, in which the shaft extends in the second portion such that the stud can axially move away from the fastener.

In some embodiments, the shaft of the stud comprises at least one undercut, and wherein the undercut cooperates with the locking elements. For example the shaft comprises an external thread and the thread form the undercut.

In some embodiments, the aperture further comprises a third portion, the first portion extending between the second portion and the third portion, wherein the lateral wall comprises a second passage, and wherein the stud is movable in translation from the first portion to the second or from the first portion to the third portion.

Other characteristics and advantages of the invention will readily appear from the following description of embodiments, provided as non-limitative examples, in reference to the accompanying drawings.

In the drawings:
Fig. 1 shows a perspective view of a system according to the invention with a fastener and a stud extending in an aperture of the fastener, the stud being in an assembly position;
Fig. 2 shows a perspective view of the system of Fig. 1 with the stud arranged in a disassembly position;
Fig. 3 shows a front perspective view of the fastener of Fig. 1 without the stud;
Fig. 4 shows rear perspective view of the fastener of Fig. 3;
Fig. 5 shows a side view of the fastener of Fig. 3;
Fig. 6 shows a cross-section view of the fastener of Fig. 3;
Fig. 7 shows a front view of the aperture of the fastener of Fig. 1.

On the different figures, the same reference signs designate identical or similar elements.

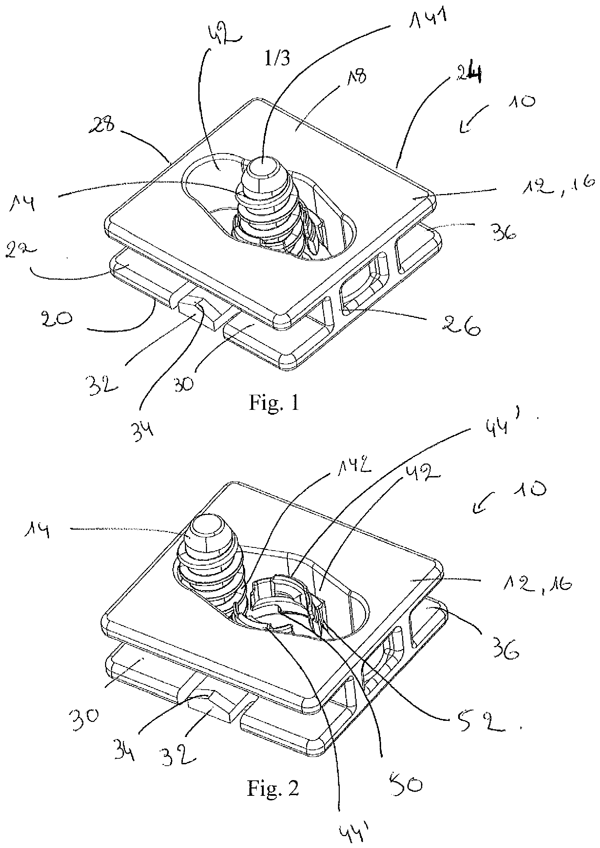

Referring firstly to Fig. 1 and Fig. 2, there is shown a system 10 for fastening or attaching an object to a component. The system 10 comprises a fastener 12 and a stud 14. The stud is movable with regard to the fastener between an assembly position, as illustrated in Fig. 1 and a disassembly position, as illustrated in Fig. 1.

The stud comprises a shaft 141 and a head. The head is adapted to be connected, for example to be welded to an object. The shaft 141 extends along a shaft axis. The shaft comprises at least an undercut 142. For instance, the shaft is a threaded shaft.

The fastener 12 has essentially a rectangular shape. More particularly, the fastener comprises a sensibly rectangular fastening body 16. The fastening body 16 comprises a top side 18, a bottom side 20, a front side 22, a rear side 24 and two lateral sides 26, 28. The front side 22, rear side 24 and two lateral sides 26, 28 connects the top side 18 and the bottom side 20. The fastening body 16 is for example made of plastic material.

The front side 22 comprises a first recess 30. For instance, the first recess extends between the two lateral sides, on the entire width of the fastening body 16. The first recess is adapted to receive a flange of a trim part or of a rail. The first recess 30 is defined at least partly by the bottom side 20 and the top side 18. The bottom side 20 is provided with a first spring finger 32 adapted to protrude within the first recess 30. The first spring finger 32 is adapted to apply an elastic force on the part destined to be inserted in the recess. The first spring finger 32 enable a pre-assembly of a rail or a trim part. The first spring finger comprises a protrusion 34 adapted to cooperate with a complementary hole formed in the part destined to be inserted in the first recess 30. The protrusion 34 is for example arranged at the free end of the first spring finger 32.

The rear side 24 comprises a second recess 36. For instance, the second recess 36 is similar to the first recess 30. The second recess 36 extends between the two lateral sides, on the entire width of the fastening body 16. The second recess 36 is adapted to receive a part such like a flange of a trim part or of a rail. The second recess 36 is defined at least partly by the bottom side 20 and the top side 18. The bottom side 20 is provided with a second spring finger 38 adapted to protrude within the second recess 36. The second spring finger 38 is adapted to apply an elastic force on the part destined to be inserted in the second recess 36. The second spring finger 38 enable a pre-assembly of a part such a rail or a trim part (and more particularly of a flange of such part). The second spring finger comprises a protrusion 40 adapted to cooperate with a complementary hole formed in the part destined to be inserted in the second recess 36. The protrusion 40 is for example arranged at the free end of the second spring finger 38, more particularly in the middle of the second spring finger 38. Once pre-assembled with the corresponding parts, the fastener 12 can be connected to the stud 14.

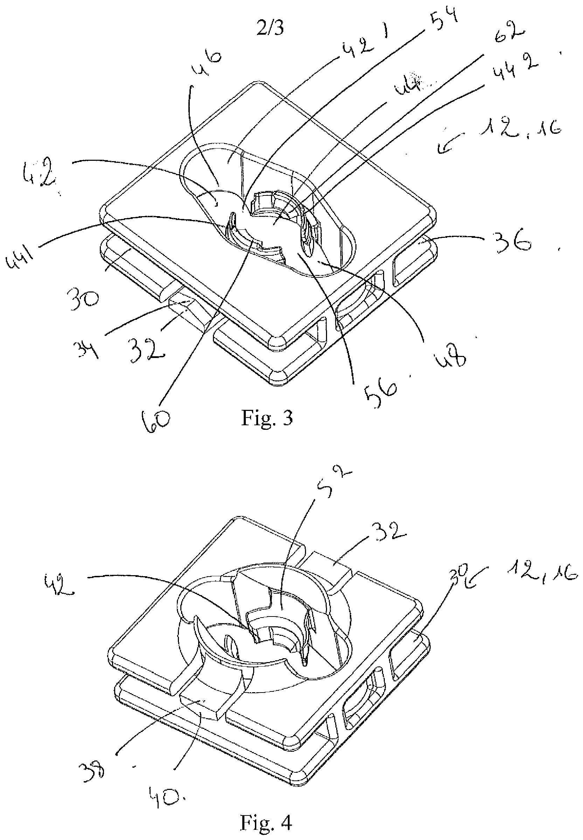

The fastening body 16 further comprises an aperture 42. The aperture 42 is defined by an aperture wall 42'. The aperture 42 extends between the top side 18 and the bottom side 20. The aperture thus form a through hole. The aperture 42 comprises a first portion 44 adapted to receive the stud 14 in the assembly position and a second portion 46 adapted to receive the stud in the disassembly position. The aperture is illustrated in Fig. 1, Fig. 2, Fig. 3, Fig. 4, Fig. 6 and Fig. 7. The aperture may, as illustrated in the figures further comprise a third portion 48, the first portion extending between the second and third portion 46, 48. The third portion is adapted to receive the stud in the disassembly position. Thus the stud 14, depending on the mounting position of the fastener may either be translated in the second portion 46 or in the third portion 48 when moved from its assembly position to its disassembly position.

The first portion 44 comprises a lateral wall 44' defining a cylindrical opening 50 extending along a longitudinal axis X between the top side 18 and the bottom side 20. The cylindrical opening 50 is adapted to receive the shaft 141 of the stud in the assembly position. The lateral wall 44' is offset with regard to the aperture wall 42'. In other words, the lateral wall 44' extends in the aperture 42.

The lateral wall 44' is connected to the aperture wall through a connecting element 52. The connecting element 52 extends for example from a free end of the lateral wall 44' in the vicinity of the bottom side 20 to the aperture wall 42'. Thus the lateral wall 44'comprises a free end in the vicinity of the top side which is not directly connected to the aperture wall, enabling a deflection of a portion of the lateral wall 44' toward the aperture wall 42'.

For instance, the lateral wall 44', as illustrated in Fig. 1, Fig. 2, Fig. 3, Fig. 4, Fig. 6 and Fig. 7, comprises two segments 441, 442. A first passage 54 is provided between the two segments 441, 442. The first passage 54 allows the shaft of the stud to be translated from the first portion 44 to the second portion 46. In the embodiment illustrated, where a third portion 48 is provided, a second passage 56 is provided between the two segments 441, 442. The second passage 56 allows the shaft of the stud to be translated from the first portion 44 to the third portion 48.

Actually, the first and second passage form a breach in the lateral wall 44', and allows the first portion to be connected with the second and third portion 46, 48.

The first passage has, in a rest-position, a dimension such that the shaft of the stud cannot move toward the second or the third portion. However, the passage can be stressed and "opens" if needed and if a force exceeding the "normal condition" forces is applied, such that the shaft can be transferred from the first portion to the second portion. The overall dimensions of the connecting element determine the value of the force needed to deflect the two segments 441, 442 toward the aperture wall 52'.

The lateral wall 44', and more particularly the inner surface of the lateral wall 44' facing the cylindrical opening 50 comprise a locking element 58. The locking element 58 comprises a locking tongue 60 projecting in the cylindrical opening 50 toward the longitudinal axis X. The locking tongue 60 is adapted to cooperate with an undercut provided in the shaft of the stud 14 extending in the first portion 44.

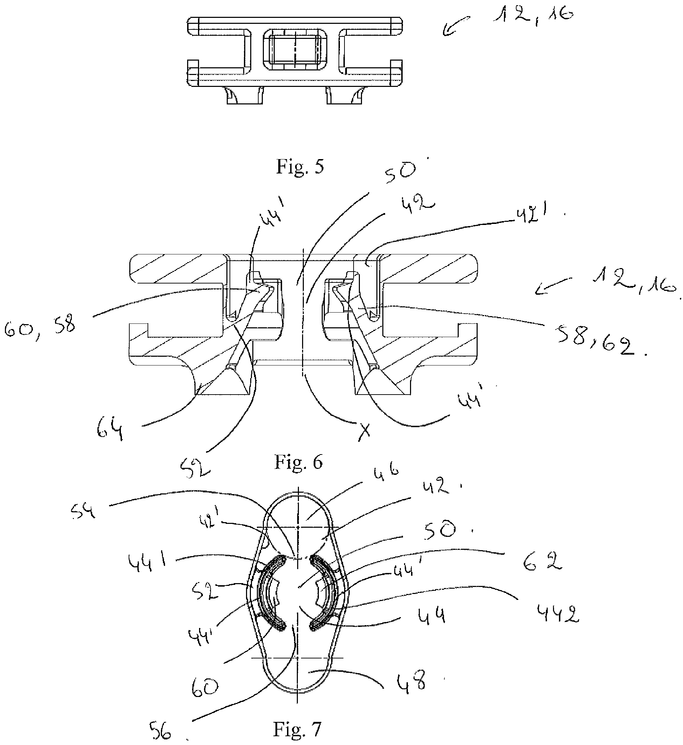

The locking element 58 comprises two locking tongues 60, 62, as illustrated in Fig. 6, each of the locking tongues comprising a projection adapted to cooperate with an undercut provided in the stud. The first segment 441 comprises a first locking tongue 60. The second segment 442 comprises a second locking tongue 62.

In the assembly position, the shaft 141 extends in the cylindrical opening 50 and the undercut 142 (more particularly, as represented, a thread of the shaft), cooperates with the locking tongue 60, 62. Thus the stud 14 is locked in the cylindrical opening 50. Thus the lateral wall 44' surrounds the shaft 141. Besides, the stud 14 is centred in the cylindrical opening 50 by the two segments 441, 442 and the locking tongues 60, 62. The two segments 441, 442 and the locking tongues 60, 62 have elastic properties which allows a compensation of positioning tolerances or part tolerances or assembly tolerances.

In the assembly position, the stud 14 is thus centred in the fastener 12.

The bottom side 20 of the fastener 12 is provided with a protruding part or projection 64. The protruding part is partly disposed around the aperture, and more particularly around the first portion of the aperture. The protruding part is adapted to surround the head of the stud when the stud is in the assembly position. The protruding part is adapted for example to compensate tolerances due to the welding of the part to the object.

If a disassembly is needed, a relative movement (more particularly a translation) of the stud 14 with regard to the fastener 12 has to be made, such that the stud 12 is stressed against the passage (more particularly against one of the passage). If a determined force is exceeded, the lateral walls 44' can be deflected in the direction of the aperture wall 42' such that the passage opens and the shaft can be transferred from the first portion to the second (or third) portion. In the second (or third) portion, the shaft is not secured or maintained by any element, such that the fastener 12 can easily be removed from the shaft.

The fastener 12 is a one-piece fastener, easy to use and to assemble.

## Claims

1. Fastener (12) for fastening an object provided with a stud (14) to a component, the fastener (12) comprising a fastening body having a top side, a bottom side, a front side, a rear side and two lateral sides,
wherein the front side comprises a first recess (30) adapted to receive a first panel,
wherein the rear side comprises a second recess (36) adapted to receive a second panel,
wherein the fastening body comprises an aperture (42) extending from the bottom side to the top side, the aperture (42) being defined by an aperture wall (42'),
**characterized in that** the aperture (42) comprises a first portion (44) adapted to receive the stud (14) in an assembly position and a second portion (46) adapted to receive the stud (14) in a disassembly position,
wherein the first portion (44) comprises a lateral wall (44') defining a cylindrical opening (50) extending along a longitudinal axis (X) between the top side and the bottom side, the lateral wall (44') being offset with regard to the aperture wall (42') and extending in the aperture (42),
wherein the lateral wall (44') is connected to the aperture wall (42'), such that a portion of the lateral wall (44') can be deflected toward the aperture wall (42'), and
wherein the lateral wall (44') comprises a locking element (58) extending in the cylindrical opening (50) and adapted to secure the position of the stud (14) in the assembly position,
wherein the lateral wall (44') comprises at least one passage (54) adapted for transferring the stud (14) from the assembly position to the disassembly position.

2. Fastener (12) according to claim 1, wherein the aperture (42) further comprises a third portion (48), the first portion (44) extending between the second portion (46) and the third portion (48), and wherein the lateral wall comprises a second passage (56) adapted for transferring the stud (14) from the assembly position to the disassembly position.

3. Fastener (12) according to claim 1 or claim 2, wherein the locking element (58) comprises a locking tongue projecting in the cylindrical opening (50) toward the longitudinal axis (X).

4. Fastener (12) according to claim 3, wherein the locking element (58) comprises two locking tongues (60, 62), each of the locking tongues comprising a projection adapted to cooperate with an undercut provided in the stud (14).

5. Fastener (12) according to any of the preceding claims, wherein the first recess (30) is defined at least partly by the bottom side and the top side, and wherein the bottom side is provided with a first spring finger (32) adapted to protrude within the first recess (30), the first spring finger forming a centering element.

6. Fastener (12) according to claim 5, wherein the second recess (36) is defined at least partly by the bottom side and the top side, and wherein the bottom side is provided with a second spring finger adapted to protrude within the second recess (36).

7. Fastener (12) according to claim 5 or claim 6, wherein the first and/or second spring finger comprises a protrusion (34, 40) provided at a free end of the bottom side, and wherein the protrusion projects within the first and/or second recess (36).

8. Fastener (12) according to any of the preceding claims, wherein the top side is flat, and wherein the bottom side comprises a projection (64), the projection partly extending at the periphery of the aperture (42).

9. System (10) comprising a fastener (12) according to any of claims 1 to 8 and a stud (14) comprising a shaft (141), and wherein the stud (14) is movable between an assembly position, in which the shaft extends in the first portion (44) and cooperates with the locking element, such that the shaft is secured within the first portion (44), and a disassembly position, in which the shaft extends in the second portion (46) such that the stud (14) can axially move away from the fastener (12).

10. System (10) according to claim 9, wherein the shaft of the stud (14) comprises at least one undercut (142), and wherein the undercut cooperates with the locking element (58).

11. System (10) according to claim 9 or claim 10, wherein the aperture (42) further comprises a third portion (48), the first portion (44) extending between the second portion (46) and the third portion (48), wherein the lateral wall comprises a second passage (56), and wherein the stud is movable in translation from the first portion to the second or from the first portion to the third portion.

## Patentansprüche

1. Befestiger (12) zum Befestigen eines Objekts, das mit einem Ansatz (14) versehen ist, an einer Komponente, wobei der Befestiger (12) einen Befestigungskörper mit einer Oberseite, einer Unterseite, einer Vorderseite, einer Rückseite und zwei Lateralseiten umfasst,
wobei die Vorderseite eine erste Ausnehmung (30) umfasst, die angepasst ist zum Aufnehmen einer ersten Platte,
wobei die Rückseite eine zweite Ausnehmung (36) umfasst, die angepasst ist zum Aufnehmen einer zweiten Platte,
wobei der Befestigungskörper eine Öffnung (42) aufweist, die von der Unterseite zur Oberseite verläuft, wobei die Öffnung (42) durch eine Öffnungswand (42') definiert ist,
**dadurch gekennzeichnet, dass** die Öffnung (42) einen ersten Teil (44), der zum Aufnehmen des Ansatzes (14) in einer Montageposition angepasst ist, und einen zweiten Teil (46) umfasst, der zum Aufnehmen des Ansatzes (14) in einer Demontageposition angepasst ist,
wobei der erste Teil (44) eine Lateralwand (44') umfasst, die eine zylindrische Öffnung (50) definiert, die entlang einer Longitudinalachse (X) zwischen der Oberseite und der Unterseite verläuft, wobei die Lateralwand (44') bezogen auf die Öffnungswand (42') versetzt ist und in der Öffnung (42) verläuft,
wobei die Lateralwand (44') mit der Öffnungswand (42') verbunden ist, so dass ein Teil der Lateralwand (44') in Richtung der Öffnungswand (42') abgelenkt werden kann, und wobei die Lateralwand (44') ein Verriegelungselement (58) umfasst, das in der zylindrischen Öffnung (50) verläuft und zum Gewährleisten der Position des Ansatzes (14) in der Montageposition angepasst ist,
wobei die Lateralwand (44') mindestens eine Passage (54) umfasst, die zum Überführen des Ansatzes (14) aus der Montageposition in die Demontageposition angepasst ist.

2. Befestiger (12) nach Anspruch 1, wobei die Öffnung (42) weiter einen dritten Teil (48) umfasst, wobei der erste Teil (44) zwischen dem zweiten Teil (46) und dem dritten Teil (48) verläuft, und wobei die Lateralwand eine zweite Passage (56) umfasst, die zum Überführen des Ansatzes (14) aus der Montageposition in die Demontageposition angepasst ist.

3. Befestiger (12) nach Anspruch 1 oder Anspruch 2, wobei das Verriegelungselement (58) eine Verriegelungszunge umfasst, die in der zylindrischen Öffnung (50) in Richtung der Longitudinalachse (X) vorsteht.

4. Befestiger (12) nach Anspruch 3, wobei das Verriegelungselement (58) zwei Verriegelungszungen (60, 62) umfasst, wobei jede der Verriegelungszungen einen Vorsprung umfasst, der zum Zusammenwirken mit einer Unterschneidung angepasst ist, die im Ansatz (14) bereitgestellt ist.

5. Befestiger (12) nach einem der vorhergehenden Ansprüche, wobei die erste Ausnehmung (30) zumindest teilweise durch die Unterseite und die Oberseite definiert ist, und wobei die Unterseite mit einem ersten Federfinger (32) versehen ist, der zum Vorstehen innerhalb der ersten Ausnehmung (30) angepasst ist, wobei der erste Federfinger ein Zentrierelement bildet.

6. Befestiger (12) nach Anspruch 5, wobei die zweite Ausnehmung (36) zumindest teilweise durch die Unterseite und die Oberseite definiert ist, und wobei die Unterseite mit einem zweiten Federfinger versehen ist, der zum Vorstehen innerhalb der zweiten Ausnehmung (36) angepasst ist.

7. Befestiger (12) nach Anspruch 5 oder Anspruch 6, wobei der erste und/oder zweite Federfinger einen Vorsprung (34, 40) umfasst, der an einem freien Ende der Unterseite bereitgestellt ist, und wobei der Vorsprung innerhalb der ersten und/oder zweiten Ausnehmung (36) vorsteht.

8. Befestiger (12) nach einem der vorhergehenden Ansprüche, wobei die Oberseite eben ist, und wobei die die Unterseite einen Vorsprung (64) umfasst, wobei der Vorsprung teilweise an der Peripherie der Öffnung (42) verläuft.

9. System (10), umfassend einen Befestiger (12) nach einem der Ansprüche 1 bis 8 und einen Ansatz (14), der einen Schaft (141) umfasst, und wobei der Ansatz (14) beweglich ist zwischen einer Montageposition, in welcher der Schaft im ersten Teil (44) verläuft und mit dem Verriegelungselement zusammenwirkt, so dass der Schaft innerhalb des ersten Teils (44) gesichert ist, und einer Demontageposition, in welcher der Schaft im zweiten Teil (46) verläuft, so dass sich der Ansatz (14) axial vom Befestiger (12) wegbewegen kann.

10. System (10) nach Anspruch 9, wobei der Schaft des Ansatzes (14) mindestens eine Unterschneidung (142) umfasst, und wobei die Unterschneidung mit dem Verriegelungselement (58) zusammenwirkt.

11. System (10) nach Anspruch 9 oder Anspruch 10, wobei die Öffnung (42) weiter einen dritten Teil (48) umfasst, wobei der erste Teil (44) zwischen dem zweiten Teil (46) und dem dritten Teil (48) verläuft, wobei die Lateralwand eine zweite Passage umfasst, und wobei der Ansatz in Translation vom ersten Teil zum zweiten oder vom ersten Teil zum dritten Teil beweglich ist.

## Revendications

1. Attache (12) permettant d'attacher un objet pourvu d'un goujon (14) à un composant, l'attache (12) comprenant un corps d'attache présentant un côté supérieur, un côté inférieur, un côté avant, un côté arrière et deux côtés latéraux,
dans laquelle le côté avant comprend un premier creux (30) adapté pour recevoir un premier panneau,
dans laquelle le côté arrière comprend un second creux (36) adapté pour recevoir un second panneau,
dans laquelle le corps d'attache comprend une ouverture (42) s'étendant depuis le côté inférieur jusqu'au côté supérieur, l'ouverture (42) étant définie par une paroi d'ouverture (42'),
**caractérisée en ce que** l'ouverture (42) comprend une première portion (44) adaptée pour recevoir le goujon (14) dans une position de montage et une deuxième portion (46) adaptée pour recevoir le goujon (14) dans une position de démontage,
dans laquelle la première portion (44) comprend une paroi latérale (44') définissant une ouverture cylindrique (50) s'étendant le long d'un axe longitudinal (X) entre le côté supérieur et le côté inférieur, la paroi latérale (44') étant décalée par rapport à la paroi d'ouverture (42') et s'étendant dans l'ouverture (42),
dans laquelle la paroi latérale (44') est reliée à la paroi d'ouverture (42'), de sorte qu'une portion de la paroi latérale (44') puisse être déviée vers la paroi d'ouverture (42'), et
dans laquelle la paroi latérale (44') comprend un élément de verrouillage (58) s'étendant dans l'ouverture cylindrique (50) et adapté pour fixer la position du goujon (14) dans la position de montage,
dans laquelle la paroi latérale (44') comprend au moins un passage (54) adapté pour transférer le goujon (14) depuis la position de montage jusqu'à la position de démontage.

2. Attache (12) selon la revendication 1, dans laquelle l'ouverture (42) comprend en outre une troisième portion (48), la première portion (44) s'étendant entre la deuxième portion (46) et la troisième portion (48), et dans laquelle la paroi latérale comprend un second passage (56) adapté pour transférer le goujon (14) depuis la position de montage jusqu'à la position de démontage.

3. Attache (12) selon la revendication 1 ou la revendication 2, dans laquelle l'élément de verrouillage (58) comprend une languette de verrouillage faisant saillie dans l'ouverture cylindrique (50) vers l'axe longitudinal (X).

4. Attache (12) selon la revendication 3, dans laquelle l'élément de verrouillage (58) comprend deux languettes de verrouillage (60, 62), chacune des languettes de verrouillage comprenant une saillie adaptée pour coopérer avec une découpe prévue dans le goujon (14).

5. Attache (12) selon l'une quelconque des revendications précédentes, dans laquelle le premier creux (30) est défini au moins en partie par le côté inférieur et le côté supérieur, et dans laquelle le côté inférieur est pourvu d'un premier doigt de ressort (32) adapté pour faire saillie dans le premier creux (30), le premier doigt de ressort formant un élément de centrage.

6. Attache (12) selon la revendication 5, dans laquelle le second creux (36) est défini au moins en partie par le côté inférieur et le côté supérieur, et dans laquelle le côté inférieur est pourvu d'un second doigt de ressort adapté pour faire saillie dans le second creux (36).

7. Attache (12) selon la revendication 5 ou la revendication 6, dans laquelle le premier et/ou le second doigt de ressort comprend une saillie (34, 40) prévue au niveau d'une extrémité libre du côté inférieur, et dans laquelle la saillie fait saillie dans le premier et/ou le second creux (36).

8. Attache (12) selon l'une quelconque des revendications précédentes, dans laquelle le côté supérieur est plat, et dans laquelle le côté inférieur comprend une saillie (64), la saillie s'étendant en partie au niveau de la périphérie de l'ouverture (42).

9. Système (10) comprenant une attache (12) selon l'une quelconque des revendications 1 à 8 et un goujon (14) comprenant une tige (141), et dans lequel le goujon (14) est mobile entre une position de montage, dans laquelle la tige s'étend dans la première portion (44) et coopère avec l'élément de verrouillage, de sorte que la tige soit fixée dans la première portion (44), et une position de démontage, dans laquelle la tige s'étend dans la deuxième portion (46) de sorte que le goujon (14) puisse s'éloigner axialement de l'attache (12).

10. Système (10) selon la revendication 9, dans lequel la tige du goujon (14) comprend au moins une découpe (142), et dans lequel la découpe coopère avec l'élément de verrouillage (58).

11. Système (10) selon la revendication 9 ou la revendication 10, dans lequel l'ouverture (42) comprend en outre une troisième portion (48), la première portion (44) s'étendant entre la deuxième portion (46) et la troisième portion (48), dans lequel la paroi latérale comprend un second passage (56), et dans lequel le goujon est mobile en translation depuis la première portion jusqu'à la deuxième ou depuis la première portion jusqu'à la troisième portion.
